# EUROPEAN PATENT APPLICATION

(11) **EP 3 579 502 A1**
(43) Date of publication of application: **11.12.2019**
(21) Application number: 17897948.0
(22) Date of filing: 03.11.2017
(51) Int. Cl.: H04L 12/761, H04L 12/46

(54) **OUTER MULTICAST IP ADDRESS ALLOCATION METHOD AND DEVICE**

(30) Priority: 24.02.2017 CN 201710102787
(71) Applicant: Huawei Technologies Co. Ltd., Shenzhen, Guangdong 518129 (CN)
(72) Inventor: WU, Guangrui, Shenzhen Guangdong 518129 (CN)
(74) Representative: Gill Jennings & Every LLP
(86) International application number: PCT/CN2017/109367
(87) International publication number: WO 2018/153123

(57) **Abstract**

Embodiments of this application disclose an outer multicast IP address assignment method and apparatus, to automatically configure an outer multicast IP address for a multicast service in a VXLAN, thereby effectively reducing an error rate during assignment of the outer multicast IP address to the multicast service in the VXLAN. The multicast IP address assignment apparatus receives an inner multicast IP address sent by a first switch of a plurality of switches, where the inner multicast IP address is a multicast IP address assigned by a multicast source to a multicast service, the first switch is any one of the plurality of switches, and the plurality of switches are included in a VXLAN; the multicast IP address assignment apparatus determines an outer multicast IP address corresponding to the inner multicast IP address, where the outer multicast IP address is used to identify the multicast service in the VXLAN; and the multicast IP address assignment apparatus sends an IP address indication message to the first switch in the VXLAN, where the IP address indication message includes the outer multicast IP address and the inner multicast IP address.

## Description

This application claims priority to Chinese Patent Application No. 201710102787.6, filed with the Chinese Patent Office on February 24, 2017 and entitled "OUTER MULTICAST IP ADDRESS ASSIGNMENT METHOD AND APPARATUS", which is incorporated herein by reference in its entirety.

### TECHNICAL FIELD

This application relates to the communications field, and in particular, to an outer multicast IP address assignment method and apparatus.

### BACKGROUND

Rapid development of the Internet leads to emergence of more one-to-many or many-to-many multi-party communication manners, such as a remote conference, interactive simulation, a distributed content system, a multi-party game, and other applications. These applications promote development of multicast technology. The multicast technology can effectively resolve a problem that exists in single-point transmission and multi-point reception, and implement efficient single-point to multi-point data transmission in a network.

A multicast replication manner is commonly used during multicast-packet forwarding in a Virtual Extensible LAN (English: Virtual Extensible Local Area Network, VXLAN for short). In such a manner, a plurality of multicast trees need to be first established in the VXLAN network, where each multicast tree is corresponding to one multicast Internet Protocol (English: Internet Protocol, IP for short) address. The multicast IP address herein is an outer multicast IP address corresponding to an inner multicast IP address that is assigned by a multicast source to a multicast service. When receiving a multicast packet, a VXLAN node performs outer encapsulation on the multicast packet by using the outer multicast IP address, and then forwards the multicast packet. At present, in the VXLAN, a VXLAN outer multicast IP address is manually assigned for an inner multicast IP address of each multicast service, and a mapping relationship between the inner multicast IP address and the outer multicast IP address of the multicast service is recorded on each switch in the VXLAN. After a server requests an on-demand multicast service, the switch in the VXLAN may generate a corresponding multicast tree based on the outer multicast IP address, and forward a multicast packet corresponding to the multicast service.

In such a method, mapping relationships between inner multicast IP addresses of multicast services and outer multicast IP addresses corresponding to the inner multicast IP addresses in the entire VXLAN are all manually configured. Consequently, manual configuration workloads are heavy, and a configuration error easily occurs.

### SUMMARY

Embodiments of this application provide an outer multicast IP address assignment method and apparatus, to automatically configure an outer multicast IP address for a multicast service in a VXLAN, thereby effectively reducing an error rate during assignment of the outer multicast IP address to the multicast service in the VXLAN.

According to a first aspect, this application provides an outer multicast IP address assignment method, including:

receiving, by a multicast IP address assignment apparatus in the VXLAN, an inner multicast IP address that is assigned by a multicast source to a multicast service and that is sent by a first switch of a plurality of switches in the VXLAN; determining an outer multicast IP address corresponding to the inner multicast IP address; and adding, by the multicast IP address assignment apparatus, the inner multicast IP address and the outer multicast IP address to an IP address indication message, and sending the IP address indication message to the first switch.

In this application, the multicast IP address assignment apparatus may be any switch in the VXLAN. In actual application, a specific selection case is not limited herein.

In addition, in this application, when sending the IP address indication message, the multicast IP address assignment apparatus may send the IP address indication message to all switches in the VXLAN or only to the first switch. A specific implementation is not limited herein.

In the technical solution provided in this application, after receiving the inner multicast IP address that is assigned by the multicast source to the multicast service and that is sent by the first switch of the switches, the multicast IP address assignment apparatus determines, based on the inner multicast IP address, the outer multicast IP address corresponding to the inner multicast IP address, where the outer multicast IP address identifies the multicast service in the VXLAN; and then, the multicast IP address assignment apparatus sends the outer multicast IP address to the first switch in the VXLAN. In this solution, the outer multicast IP address corresponding to the multicast group is automatically configured by the VXLAN without manual configuration, so that configuration workloads can be reduced and a configuration error rate can be reduced.

Optionally, the determining, by the multicast IP address assignment apparatus, an outer multicast IP address corresponding to the inner multicast IP address may be specifically as follows:
after obtaining the inner multicast IP address, querying, by the multicast IP address assignment apparatus, whether there is an outer multicast IP address corresponding to the inner multicast IP address in a multicast encapsulation table stored in the multicast IP address assignment apparatus, where each entry of the multicast encapsulation table is used to record an inner multicast IP address and a corresponding outer multicast IP address; and
if there is an outer multicast IP address corresponding to the inner multicast IP address in the multicast encapsulation table, determining, by the multicast IP address assignment apparatus, that the outer multicast IP address has been assigned for the inner multicast IP address; and obtaining, by the multicast IP address assignment apparatus directly from the multicast encapsulation table, the outer multicast IP address corresponding to the inner multicast IP address; or
if there is no outer multicast IP address corresponding to the inner multicast IP address in the multicast encapsulation table, determining, by the multicast IP address assignment apparatus, that no outer multicast IP address has been assigned for the inner multicast IP address; and assigning, by the multicast IP address assignment apparatus, a corresponding outer multicast IP address for the inner multicast IP address.

In the technical solution provided in this application, the multicast IP address assignment apparatus directly uses the assigned outer multicast IP address after assigning the corresponding outer multicast IP address for the inner multicast IP address, to ensure that a same outer multicast IP address is used for same inner multicast IP addresses, thereby reducing configuration workloads and a configuration error rate in the VXLAN.

Optionally, based on the foregoing solution, when the multicast IP address assignment apparatus assigns the outer multicast IP address for the inner multicast IP address, the multicast IP address assignment apparatus may include an IP address pool. The IP address pool includes a plurality of IP addresses, and the plurality of IP addresses may be used only as IP address identifiers of inner multicast IP addresses, and cannot be used for other purposes, for example, cannot be used as IP addresses of common users. If the multicast IP address assignment apparatus determines that no corresponding outer multicast IP address has been assigned for the inner multicast IP address, the multicast IP address assignment apparatus selects an unused IP address from the IP address pool as the outer multicast IP address corresponding to the inner multicast IP address.

In the technical solution provided in this application, the multicast IP address assignment apparatus selects the corresponding outer multicast IP address from the preconfigured IP address pool, to effectively avoid an IP address conflict.

Optionally, when the multicast IP address assignment apparatus sends the IP address indication message, the IP address indication message may be an Ethernet Virtual Private Network (English: Ethernet Virtual Private Network, EVPN for short) protocol extension message; the EVPN protocol extension message includes a type field, a length field, and a value field; the type field is used to indicate a type of the EVPN protocol extension message; the length field is used to indicate a length of the EVPN protocol extension message; and the value field is used to indicate the outer multicast IP address and the inner multicast IP address.

In this application, the IP address indication message may include a plurality of types of protocol messages, and is not limited to the EVPN protocol extension message provided in this application. A specific type of the IP address indication message is not limited herein.

According to a second aspect, this application provides an outer multicast IP address assignment method, including:
receiving, by a server, a multicast query message sent by a multicast source, and sending a multicast response message including an inner multicast IP address to a first switch of a plurality of switches in a VXLAN; receiving, by the first switch, the multicast response message, obtaining the inner multicast IP address from the multicast response message, and sending, by the first switch, the inner multicast IP address to a multicast IP address assignment apparatus in the VXLAN, so that the multicast IP address assignment apparatus determines an outer multicast IP address corresponding to the inner multicast IP address; and receiving, by the first switch, an IP address indication message that includes the outer multicast IP address and the inner multicast IP address and that is sent by the multicast IP address assignment apparatus.

In the technical solution provided in this application, the first switch obtains the inner multicast IP address from the multicast response message sent by the server, and sends the inner multicast IP address to the multicast IP address assignment apparatus, so that the multicast IP address assignment apparatus determines the outer multicast IP address corresponding to the inner multicast IP address. This can ensure that an outer multicast IP address can be determined for an on-demand multicast service that is requested by each server, and can effectively ensure that a same outer multicast IP address is used for same multicast services, thereby reducing configuration workloads and a configuration error rate in the VXLAN.

Optionally, when the multicast IP address assignment apparatus sends the IP address indication message, the IP address indication message may be an Ethernet Virtual Private Network (English: Ethernet Virtual Private Network, EVPN for short) protocol extension message; the EVPN protocol extension message includes a type field, a length field, and a value field; the type field is used to indicate a type of the EVPN protocol extension message; the length field is used to indicate a length of the EVPN protocol extension message; and the value field is used to indicate the outer multicast IP address and the inner multicast IP address.

In this application, the IP address indication message may include a plurality of types of protocol messages, and is not limited to the EVPN protocol extension message provided in this application. A specific type of the IP address indication message is not limited herein.

Optionally, after receiving the IP address indication message, the first switch may update a stored multicast encapsulation table based on the outer multicast IP address and the inner multicast IP address in the IP address indication message.

In this solution provided in this application, after receiving a multicast packet sent by the multicast source, the first switch may forward the multicast packet to the server based on the multicast encapsulation table and a multicast forwarding table that is stored in the first switch. Each entry of the multicast forwarding table records a mapping relationship between an inner multicast IP address and a multicast group member.

According to a third aspect, this application provides a multicast IP address assignment apparatus, where the multicast IP address assignment apparatus has a function of the multicast IP address assignment apparatus in the foregoing method. The function may be implemented by using hardware or may be implemented by hardware by executing corresponding software. The hardware or software includes one or more modules corresponding to the function.

In a possible implementation, the multicast IP address assignment apparatus is applied to a VXLAN, where the VXLAN includes the multicast IP address assignment apparatus and a plurality of switches, and each switch is connected to at least one server; and the multicast IP address assignment apparatus includes:
a receiving module, configured to receive an inner multicast IP address sent by a first switch of the plurality of switches, where the inner multicast IP address is a multicast IP address assigned by a multicast source to a multicast service, and the first switch is any one of the plurality of switches;
a processing module, configured to determine an outer multicast IP address corresponding to the inner multicast IP address, where the outer multicast IP address is used to identify the multicast service in the VXLAN; and
a sending module, configured to send an IP address indication message to the first switch in the VXLAN, where the IP address indication message includes the outer multicast IP address and the inner multicast IP address.

In another possible implementation, the multicast IP address assignment apparatus is applied to a VXLAN, where the VXLAN includes the multicast IP address assignment apparatus and a plurality of switches, and each switch is connected to at least one server; and the multicast IP address assignment apparatus includes:
a transceiver, a processor, and a bus, where
the transceiver is connected to the processor by using the bus;
the transceiver is configured to receive an inner multicast IP address sent by a first switch of the plurality of switches, where the inner multicast IP address is a multicast IP address assigned by a multicast source to a multicast service, and the first switch is any one of the plurality of switches;
the processor is configured to determine an outer multicast IP address corresponding to the inner multicast IP address, where the outer multicast IP address is used to identify the multicast service in the VXLAN; and
the transceiver is configured to send an IP address indication message to the first switch in the VXLAN, where the IP address indication message includes the outer multicast IP address and the inner multicast IP address.

According to a fourth aspect, this application provides a switch, where the switch has a function of the switch in the foregoing method. The function may be implemented by using hardware or may be implemented by hardware by executing corresponding software. The hardware or software includes one or more modules corresponding to the function.

In a possible implementation, the switch is applied to a Virtual Extensible LAN VXLAN, where the VXLAN includes a multicast IP address assignment apparatus and a plurality of switches, each switch is connected to at least one server, and the switch is any one of the plurality of switches; and the switch includes:
a receiving module, configured to receive a multicast response message sent by a server connected to the switch, where the multicast response message is sent by the server based on a multicast query message sent by a multicast source, the multicast response message includes an inner multicast IP address, and the inner multicast IP address is a multicast IP address assigned by the multicast source to a multicast service;
a processing module, configured to obtain the inner multicast IP address from the multicast response message; and
a sending module, configured to send the inner multicast IP address to the multicast IP address assignment apparatus, where
the receiving module is configured to receive an IP address indication message sent by the multicast IP address assignment apparatus, where the IP address indication message includes an outer multicast IP address and the inner multicast IP address, and the outer multicast IP address is determined by the multicast IP address assignment apparatus based on the inner multicast IP address.

In another possible implementation, the switch is applied to a Virtual Extensible LAN VXLAN, where the VXLAN includes a multicast IP address assignment apparatus and a plurality of switches, each switch is connected to at least one server, and the switch is any one of the plurality of switches; and the switch includes:
a receiver, a processor, and a transmitter, where
the receiver is configured to receive a multicast response message sent by a server connected to the switch, where the multicast response message is sent by the server based on a multicast query message sent by a multicast source, the multicast response message includes an inner multicast IP address, and the inner multicast IP address is a multicast IP address assigned by the multicast source to a multicast service;
the processor is configured to obtain the inner multicast IP address from the multicast response message;
the transmitter is configured to send the inner multicast IP address to the multicast IP address assignment apparatus, where
the receiver is configured to receive an IP address indication message sent by the multicast IP address assignment apparatus, where the IP address indication message includes an outer multicast IP address and the inner multicast IP address, and the outer multicast IP address is determined by the multicast IP address assignment apparatus based on the inner multicast IP address.

According to a fifth aspect, this application provides a computer readable storage medium, including an instruction. When the instruction runs on a computer, the computer performs the methods in the foregoing aspects.

According to a sixth aspect, this application provides a computer program product including an instruction. When the computer program product runs on a computer, the computer performs the methods in the foregoing aspects.

It can be learned from the foregoing technical solutions that in the embodiments of this application, after receiving the inner multicast IP address that is assigned by the multicast source to the multicast service and that is sent by the first switch of the switches, the multicast IP address assignment apparatus determines, based on the inner multicast IP address, the outer multicast IP address corresponding to the inner multicast IP address, where the outer multicast IP address identifies the multicast service in the VXLAN; and then, the multicast IP address assignment apparatus sends the outer multicast IP address to the first switch in the VXLAN. In the solutions, the outer multicast IP address corresponding to the multicast group is automatically configured by the VXLAN without manual configuration, so that configuration workloads can be reduced and a configuration error rate can be reduced.

### BRIEF DESCRIPTION OF DRAWINGS

FIG. 1 is a schematic diagram of a multicast bearer form in a VXLAN according to an embodiment of this application;
FIG. 2 is a schematic flowchart of an outer multicast IP address assignment method according to an embodiment of this application;
FIG. 3 is a schematic diagram of a multicast process in a VXLAN according to an embodiment of this application;
FIG. 4 is a schematic structural diagram of a multicast IP address assignment apparatus according to an embodiment of this application;
FIG. 5 is another schematic structural diagram of a multicast IP address assignment apparatus according to an embodiment of this application;
FIG. 6 is a schematic structural diagram of a switch according to an embodiment of this application; and
FIG. 7 is another schematic structural diagram of a switch according to an embodiment of this application.

### DESCRIPTION OF EMBODIMENTS

Embodiments of this application provide an outer multicast IP address assignment method and apparatus, to automatically configure a corresponding outer multicast IP address for an inner multicast IP address of a multicast service in a VXLAN, thereby effectively reducing an error rate during assignment of the outer multicast IP address for the inner multicast IP address in the VXLAN.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a manner are interchangeable in proper cases so that the embodiments of this application can be implemented in other orders than the order illustrated or described in this application. Moreover, the terms "include", "contain" and any other variants thereof are intended to cover non-exclusive inclusion, for example, a process, method, system, product, or device that includes a series of steps or units is not limited to those expressly listed steps or units, but may further include other steps or units that are not expressly listed or that are inherent to such a process, method, product, or device.

Rapid development of the Internet leads to emergence of more one-to-many or many-to-many multi-party communication manners, such as a remote conference, interactive simulation, a distributed content system, a multi-party game, and other applications. These applications promote development of multicast services.

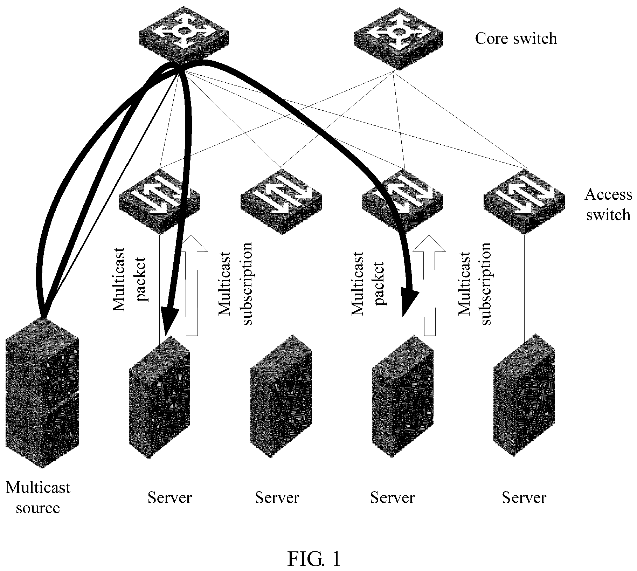

As shown in FIG. 1, an existing multicast system architecture includes a VXLAN, a multicast source, and one or more servers. The VXLAN includes one or more switches. In FIG. 1, the switch includes an access switch and a core switch. It should be noted that this application concerns an access switch, and therefore both the switch and a first switch in this application indicate the access switch unless otherwise specified. The first switch in this application is any switch in the VXLAN. A current multicast bearer manner in the VXLAN is: A plurality of servers separately request an on-demand multicast service from the multicast source by using a plurality of switches connected to the plurality of servers (as shown in FIG. 1, for a 1^{st} server and a 3^{rd} server from the left to the right, gray arrows indicate that the servers perform multicast subscription from the multicast source); and the multicast source sends corresponding multicast packets to the plurality of servers by using the plurality of switches (black arrows shown in FIG. 1 indicate that the switches in the VXLAN forward, to the servers that perform multicast subscription, the multicast packets sent by the multicast source). A multicast technology can effectively resolve a problem that exists in single-point transmission and multi-point reception, and implement efficient single-point to multi-point data transmission in a network. In a multicast replication manner used during multicast-packet forwarding in the VXLAN, a plurality of multicast trees need to be first established in the VXLAN network, where each multicast tree is corresponding to one multicast IP address. The multicast IP address herein is an outer multicast IP address corresponding to an inner multicast IP address that is assigned by the multicast source to a multicast service. When receiving a multicast packet, a VXLAN node performs outer encapsulation on the multicast packet by using the outer multicast IP address, and then forwards the multicast packet. At present, in the VXLAN, a VXLAN outer multicast IP address is manually assigned for an inner multicast IP address of each multicast service, and a mapping relationship between the inner multicast IP address and the outer multicast IP address of the multicast service is recorded on each switch in the VXLAN. After a server requests an on-demand multicast service, the switch in the VXLAN may generate a corresponding multicast tree based on the outer multicast IP address, and forward a multicast packet corresponding to the multicast service.

In such a method, mapping relationships between inner multicast IP addresses of multicast services and outer multicast IP addresses corresponding to the inner multicast IP addresses in the entire VXLAN are all manually configured. Consequently, manual configuration workloads are heavy, and a configuration error easily occurs. At present, the multicast technology implemented in the VXLAN is usually manually assigning a VXLAN outer multicast IP address for each multicast group, and configuring a mapping relationship between the multicast group and the outer multicast IP address on each switch. After the server requests an on-demand multicast service corresponding to a multicast group, the switch in the VXLAN network may generate a corresponding multicast tree based on an outer multicast IP address corresponding to the multicast group, and forward a multicast packet corresponding to the multicast group. In such a method, mapping relationships between multicast groups and outer multicast IP addresses corresponding to the multicast groups in the entire VXLAN are all manually configured. Consequently, manual configuration workloads are heavy, and a configuration error easily occurs.

To resolve this problem, this application provides the following technical solution: A multicast IP address assignment apparatus in the VXLAN receives the inner multicast IP address that is assigned by the multicast source to the multicast service and that is sent by the first switch of a plurality of switches in the VXLAN, and then determines an outer multicast IP address corresponding to the inner multicast IP address; and the multicast IP address assignment apparatus adds the inner multicast IP address and the outer multicast IP address to an IP address indication message, and sends the IP address indication message to the first switch.

The technical solution provided in this application is applied to the VXLAN, where the VXLAN includes the assignment apparatus and the plurality of switches, and each switch is connected to at least one server. A plurality of servers connected to the plurality of switches include at least one multicast source, and the multicast source is configured to provide a multicast service for another server.

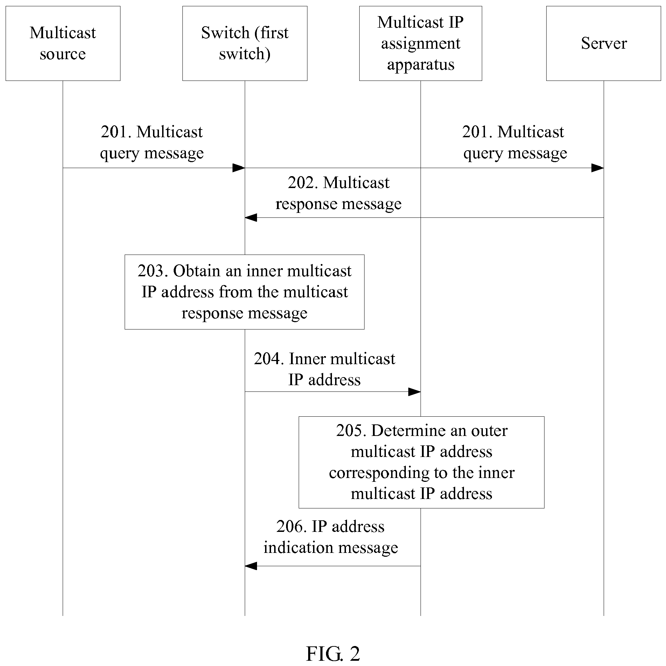

Referring to FIG. 2, FIG. 2 shows an embodiment of an IP address assignment method according to an embodiment of this application. The method includes the following steps.

201. A multicast source sends a multicast query message to servers connected to all switches in the VXLAN.

The multicast source sends the multicast query message to the servers connected to all the switches in the VXLAN. The multicast query message carries an identifier of a multicast service that the multicast source needs to query, that is, an inner multicast IP address of the multicast service.

In actual application, because on-demand multicast services requested by the server are different, to determine in real time whether a multicast group member changes, the multicast source sends the multicast query message to a switch connected to the multicast source, and the switch connected to the multicast source sends the multicast query message to the servers connected to all the switches in the VXLAN, so as to determine the multicast group member. The multicast source may send the multicast query message periodically, or may send the multicast query message according to an instruction.

202. A first server sends a multicast response message to a first switch, where the multicast response message includes an inner multicast IP address.

The first server is any server. After receiving the multicast query message, if the first server determines to request the on-demand multicast service corresponding to the inner multicast IP address included in the multicast query message, the first server sends the multicast response message including the inner multicast IP address to the first switch connected to the first server. The inner multicast IP address is the identifier assigned by the multicast source to the multicast service.

203. The first switch obtains the inner multicast IP address from the multicast response message.

After receiving the multicast response message, the first switch parses the multicast response message to obtain the inner multicast IP address.

In this embodiment, after receiving the multicast response message, the first switch further needs to forward the multicast response message to the multicast source, so that the multicast source determines, based on the multicast response message, that the first server has requested the on-demand multicast service corresponding to the inner multicast IP address, and sends a multicast packet corresponding to the inner multicast IP address to the first server.

204. The first switch sends the inner multicast IP address to a multicast IP address assignment apparatus.

After obtaining the inner multicast IP address, the first switch sends the inner multicast IP address to the multicast IP address assignment apparatus.

In this embodiment, before sending the inner multicast IP address to the multicast IP address assignment apparatus, the first switch may first determine, based on the inner multicast IP address, whether there is an outer multicast IP address corresponding to the inner multicast IP address in a multicast encapsulation table stored in the first switch. If there is such an outer multicast IP address, the first switch does not send the inner multicast IP address to the multicast IP address assignment apparatus, and it indicates that the multicast encapsulation table of the first switch has recorded the inner multicast IP address and the outer multicast IP address corresponding to the inner multicast IP address. When receiving a multicast packet that is encapsulated based on the outer multicast IP address, the first switch decapsulates the multicast packet to obtain the original multicast packet, may determine the inner multicast IP address directly by using the multicast encapsulation table stored in the first switch, and forwards the original multicast packet based on the determined inner multicast IP address and a multicast forwarding table. The original multicast packet is a multicast packet to which VXLAN encapsulation has not been added and that is sent by the multicast source. If there is no outer multicast IP address corresponding to the inner multicast IP address in the multicast encapsulation table stored in the first switch, the first switch sends the inner multicast IP address to the multicast IP address assignment apparatus, so that the multicast IP address assignment apparatus assigns a corresponding outer multicast IP address for the inner multicast IP address.

In this embodiment, the first switch may send the inner multicast IP address by using an EVPN protocol extension message or another message. A specific implementation is not limited herein.

205. The multicast IP address assignment apparatus determines an outer multicast IP address corresponding to the inner multicast IP address.

After receiving the inner multicast IP address, the multicast IP address assignment apparatus determines the corresponding outer multicast IP address for the inner multicast IP address.

In this embodiment, when determining the corresponding outer multicast IP address for the inner multicast IP address, the multicast IP address assignment apparatus needs to first determine whether the multicast IP address assignment apparatus has assigned the corresponding outer multicast IP address for the inner multicast IP address. A specific case is as follows:
After obtaining the inner multicast IP address, the multicast IP address assignment apparatus queries whether there is an outer multicast IP address corresponding to the inner multicast IP address in the multicast encapsulation table in the multicast IP address assignment apparatus. In this embodiment, the multicast encapsulation table is used to record a correspondence between an inner multicast IP address and an outer multicast IP address. In other words, each entry of the multicast encapsulation table is used to record an inner multicast IP address and an outer multicast IP address corresponding to the inner multicast IP address.

If there is an outer multicast IP address corresponding to the inner multicast IP address in the multicast encapsulation table, the multicast IP address assignment apparatus may determine that the outer multicast IP address has been assigned for the inner multicast IP address; and the multicast IP address assignment apparatus may obtain, directly from the multicast encapsulation table, the outer multicast IP address corresponding to the inner multicast IP address.

If there is no outer multicast IP address corresponding to the inner multicast IP address in the multicast encapsulation table, the multicast IP address assignment apparatus may determine that no outer multicast IP address has been assigned for the inner multicast IP address; and the multicast IP address assignment apparatus may assign a corresponding outer multicast IP address for the inner multicast IP address.

The multicast IP address assignment apparatus may include an IP address pool. The IP address pool includes a plurality of IP addresses, and the plurality of IP addresses may be used only as outer multicast IP addresses corresponding to inner multicast IP addresses, and cannot be used for other purposes, for example, cannot be used as IP addresses of common users. When assigning the outer multicast IP address for the inner multicast IP address, if the multicast IP address assignment apparatus determines that no outer multicast IP address has been assigned to the multicast service, the multicast IP address assignment apparatus selects an unused IP address from the IP address pool as the outer multicast IP address corresponding to the inner multicast IP address.

206. The multicast IP address assignment apparatus sends an IP address indication message to the first switch, where the IP address indication message includes the outer multicast IP address and the inner multicast IP address.

After determining the outer multicast IP address corresponding to the inner multicast IP address, the multicast IP address assignment apparatus sends the outer multicast IP address and the inner multicast IP address together to the first switch or all the switches in the VXLAN, so that the first switch updates, based on the outer multicast IP address and the inner multicast IP address, the multicast encapsulation table stored in the first switch, to be specific, records a correspondence between the inner multicast IP address and the outer multicast IP address in the multicast encapsulation table. The multicast encapsulation table of the first switch is used to record a correspondence between an inner multicast IP address and an outer multicast IP address. In other words, each entry of the multicast encapsulation table indicates an outer multicast IP address and a corresponding inner multicast IP address.

In the technical solution provided in this application, the multicast IP address assignment apparatus may send the IP address indication message to all the switches in the VXLAN, or may send the IP address indication message only to the first switch. A specific case is not limited herein.

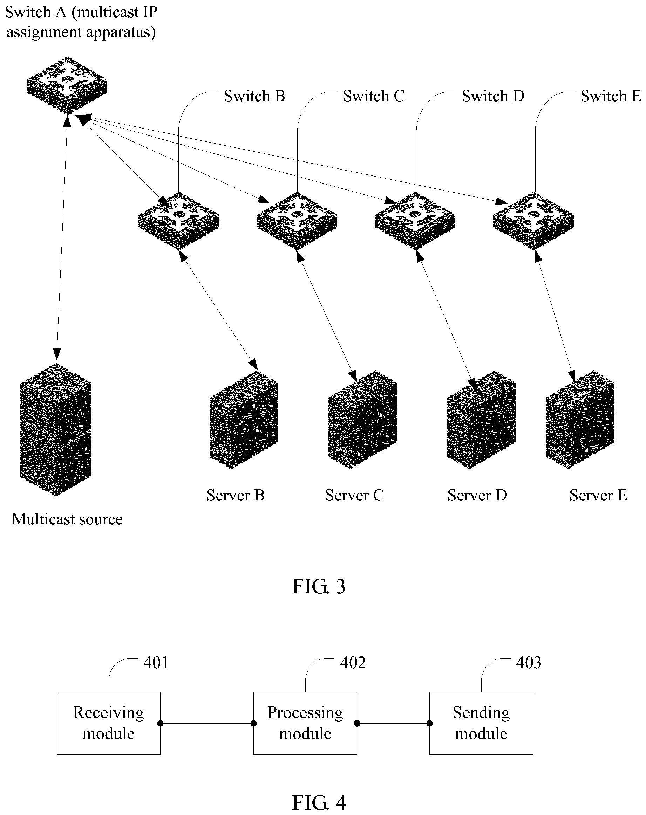

In this embodiment, for ease of understanding, the following uses an actual scenario for description. It is assumed that a multicast source, servers, and switches have a connection relationship shown in FIG. 3. To be specific, a VXLAN includes five switches: a switch A, a switch B, a switch C, a switch D, and a switch E, the switch A is preconfigured as a multicast IP address assignment apparatus, and the switches can communicate with each other. Before sending a packet to another switch, any switch needs to add VXLAN encapsulation to the packet. If the switch A is used as the multicast IP address assignment apparatus, the switch A may further include an IP address pool. An IP address in the IP address pool is used to identify only an inner multicast IP address, and the inner multicast IP address herein is assigned by the multicast source to a multicast service. Each of the five switches is connected to at least one server, and a plurality of servers connected to the five switches include at least one multicast source. The multicast source is configured to assign an inner multicast IP address to a multicast service and send a multicast packet. For example, the switch A is connected to the multicast source, the switch B is connected to a server B, the switch C is connected to a server C, the switch D is connected to a server D, and the switch E is connected to a server E. A current multicast service is a remote conference in this embodiment, and a multicast process in the VXLAN is as follows: The multicast source sends a multicast query message to the switch A, where the multicast query message is used to query an on-demand status of the remote conference; and after adding VXLAN encapsulation to the multicast query message, the switch A broadcasts, to the switches B, C, D, and E, the multicast query message to which VXLAN encapsulation has been added. Then, the switches B, C, D, and E separately decapsulate the received multicast query message to which VXLAN encapsulation has been added, to obtain the multicast query message; and send the multicast query message to the connected servers. To be specific, the switch B sends the multicast query message to the server B, the switch C sends the multicast query message to the server C, the switch D sends the multicast query message to the server D, and the switch E sends the multicast query message to the server E. Subsequently, each server feeds back, to the multicast source based on a status of the server, whether the server has participated in the remote conference. If the servers B, C, and E have participated in the remote conference, the server B sends a multicast response message to the switch B, where the multicast response message includes an inner multicast IP address of the remote conference, and the multicast response message further indicates that the server B has requested the on-demand multicast service, that is, the remote conference. Likewise, the server C sends a corresponding multicast response message to the switch C, and the server E sends a corresponding multicast response message to the switch E. After receiving the corresponding multicast response message, the switches B, C, and E obtain the corresponding inner multicast IP address. For example, the switch B obtains the inner multicast IP address of the remote conference. Then, the switches B, C, and E each send the corresponding inner multicast IP address of the remote conference to the multicast IP address assignment apparatus, that is, the switch A. Then, the multicast IP address assignment apparatus queries whether there is an outer multicast IP address of the remote conference in a stored multicast encapsulation table, where each entry of the multicast encapsulation table is used to record an inner multicast IP address and a corresponding outer multicast IP address. If the multicast IP address assignment apparatus determines that there is an outer multicast IP address of the remote conference in the multicast encapsulation table, assuming that the outer multicast IP address is an IP address A, the multicast IP address assignment apparatus sends the IP address A and the inner multicast IP address of the remote conference to the switches B, C, and E in the VXLAN. If the multicast IP address assignment apparatus determines that there is no outer multicast IP address of the remote conference in the multicast encapsulation table, the multicast IP address assignment apparatus selects an unused IP address B from the IP address pool as the outer multicast IP address of the remote conference. In this case, the multicast IP address assignment apparatus sends the IP address B and the inner multicast IP address of the remote conference to the switches B, C, and E in the VXLAN. After receiving the outer multicast IP address of the remote conference and the inner multicast IP address of the remote conference, the switches B, C, and E update multicast encapsulation tables stored in the switches B, C, and E, respectively. The switches B, C, and E also send the multicast response message to the multicast source. In the case, the multicast source sends data about the remote conference to the switches connected to the servers that join the multicast group. If receiving the data about the remote conference, the switches B, C, and E send the data to the corresponding servers based on the multicast encapsulation tables and multicast forwarding tables that are stored in the switches B, C, and E. Each multicast forwarding table includes a correspondence between an inner multicast IP address and a server used as a multicast group member.

It should be noted that in the VXLAN, when sending a packet to another switch, a switch needs to first add VXLAN encapsulation to the packet, and sends the packet to the another switch based on information in the VXLAN encapsulation. The outer multicast IP address in this embodiment of the present invention is an outer IP address that needs to be added to the VXLAN encapsulation. Then, a switch connected to the multicast source, for example, the switch A, forwards the multicast packet in the VXLAN based on the outer multicast IP address in the VXLAN encapsulation. Switches receiving the multicast packet to which VXLAN encapsulation has been added, for example, the switches B, C, and E, need to decapsulate the received multicast packet to which VXLAN encapsulation has been added, to obtain the original multicast packet; and based on the inner multicast IP address corresponding to the outer multicast IP address, and the multicast forwarding tables stored in the switches B, C, and E, send the original multicast packet to the servers that have requested the on-demand multicast service. The original multicast packet is the multicast packet sent by the multicast source.

In the scenario in this embodiment, after determining the outer multicast IP address corresponding to the inner multicast IP address of the remote conference, the multicast IP address assignment apparatus may further send the outer multicast IP address and the inner multicast IP address to all the switches in the VXLAN. A specific implementation is not limited herein.

In this embodiment, after receiving the inner multicast IP address that is assigned by the multicast source to the multicast service and that is sent by the first switch of the switches, the multicast IP address assignment apparatus determines, based on the inner multicast IP address, the outer multicast IP address corresponding to the inner multicast IP address, where the outer multicast IP address identifies the multicast service in the VXLAN; and then, the multicast IP address assignment apparatus sends the outer multicast IP address to the first switch in the VXLAN. In this solution, the outer multicast IP address corresponding to the multicast group is automatically configured by the VXLAN without manual configuration, so that configuration workloads can be reduced and a configuration error rate can be reduced.

The foregoing describes the outer multicast IP address assignment method in the embodiments of this application, and the following describes a multicast IP address assignment apparatus and a switch in the embodiments of this application.

For details, refer to FIG. 4. A multicast IP address assignment apparatus in an embodiment of this application includes:
a receiving module 401, configured to receive an inner multicast IP address sent by a first switch of a plurality of switches, where the inner multicast IP address is a multicast IP address assigned by a multicast source to a multicast service, and the first switch is any one of the plurality of switches;
a processing module 402, configured to determine an outer multicast IP address corresponding to the inner multicast IP address, where the outer multicast IP address is used to identify the multicast service in a VXLAN; and
a sending module 403, configured to send an IP address indication message to the first switch in the VXLAN, where the IP address indication message includes the outer multicast IP address and the inner multicast IP address.

Optionally, the processing module 402 is specifically configured to: determine, based on the inner multicast IP address, whether an outer multicast IP address has been assigned for the inner multicast IP address; and
if no outer multicast IP address has been assigned for the inner multicast IP address, assign an outer multicast IP address for the inner multicast IP address.

Optionally, the processing module 402 is specifically configured to: determine whether there is an outer multicast IP address corresponding to the inner multicast IP address in a multicast encapsulation table, where each entry of the multicast encapsulation table is used to record an inner multicast IP address and a corresponding outer multicast IP address; and
if there is an outer multicast IP address corresponding to the inner multicast IP address in the multicast encapsulation table, determine that the outer multicast IP address has been assigned for the inner multicast IP address; or
if there is no outer multicast IP address corresponding to the inner multicast IP address in the multicast encapsulation table, determine that no outer multicast IP address has been assigned for the inner multicast IP address.

Optionally, the processing module 402 is specifically configured to select an unused IP address from the IP address pool as the outer multicast IP address corresponding to the inner multicast IP address. Optionally, the processing module 402 is further configured to: if the multicast IP address assignment apparatus has assigned the corresponding outer multicast IP address to the multicast service, obtain the outer multicast IP address.

Optionally, the IP address indication message is an Ethernet VPN EVPN protocol extension message; the EVPN protocol extension message includes a type field, a length field, and a value field; the type field is used to indicate a type of the EVPN protocol extension message; the length field is used to indicate a length of the EVPN protocol extension message; and the value field is used to indicate the outer multicast IP address and the inner multicast IP address.

Further, each module in this embodiment can implement each step in the foregoing embodiment.

In this embodiment, after the receiving module 401 receives the inner multicast IP address that is assigned by the multicast source to the multicast service and that is sent by the first switch of the switches, the processing module 402 determines, based on the inner multicast IP address, the outer multicast IP address corresponding to the inner multicast IP address, where the outer multicast IP address identifies the multicast service in the VXLAN; and then, the sending module 403 sends the outer multicast IP address to the first switch in the VXLAN. In this solution, the outer multicast IP address corresponding to the multicast group is automatically configured by the VXLAN without manual configuration, so that configuration workloads can be reduced and a configuration error rate can be reduced.

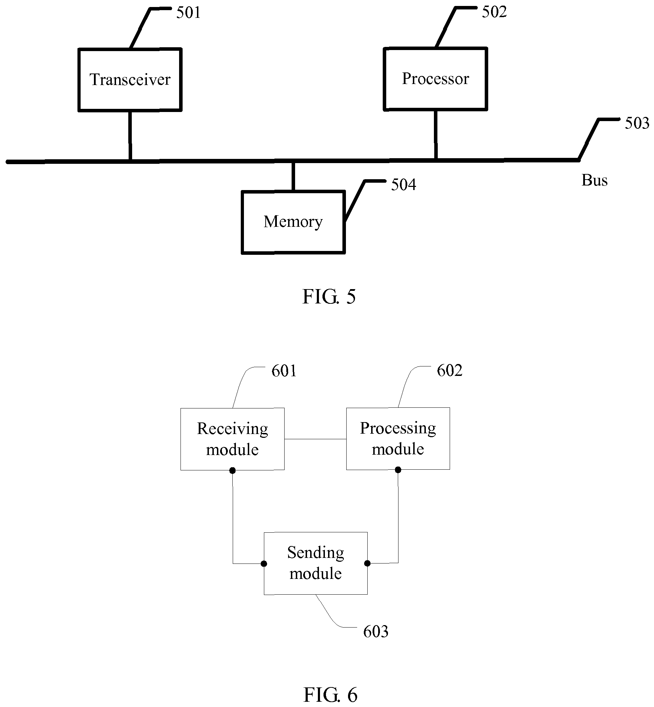

For details, refer to FIG. 5. FIG. 5 shows another embodiment of a multicast IP address assignment apparatus according to an embodiment of this application. The multicast IP address assignment apparatus includes:
a transceiver 501, a processor 502, and a bus 503, where the transceiver 501 and the processor 502 are connected by using the bus 503.

The bus 503 may be a Peripheral Component Interconnect (Peripheral Component Interconnect, PCI for short) bus, an Extended Industry Standard Architecture (Extended Industry Standard Architecture, EISA for short) bus, or the like. The bus may be classified into an address bus, a data bus, a control bus, and the like. For ease of representation, the bus is represented by using only one bold line in FIG. 5. However, this does not mean that there is only one bus or one type of bus.

The processor 502 may be a central processing unit (central processing unit, CPU for short), a network processor (network processor, NP for short), or a combination of a CPU and an NP.

The processor 502 may further include a hardware chip. The foregoing hardware chip may be an application-specific integrated circuit (application-specific integrated circuit, ASIC for short), a programmable logic device (programmable logic device, PLD for short), or a combination thereof. The PLD may be a complex programmable logic device (complex programmable logic device, CPLD for short), a field-programmable gate array (field-programmable gate array, FPGA for short), a generic array logic (generic array logic, GAL for short), or any combination thereof.

Referring to FIG. 5, the multicast IP address assignment apparatus may further include a memory 504. The memory 504 is configured to store a multicast encapsulation table. The memory 504 may include a volatile memory (volatile memory), for example, a random-access memory (random-access memory, RAM for short). The memory may alternatively include a non-volatile memory (non-volatile memory), for example, a flash memory (flash memory), a hard disk drive (hard disk drive, HDD for short), or a solid-state drive (solid-state drive, SSD for short). The memory 504 may alternatively include a combination of the foregoing types of memories.

Optionally, the memory 504 may be further configured to store a program instruction. By invoking the program instruction stored in the memory 504, the processor 502 can perform one or more steps or an optional implementation in the embodiments shown in FIG. 1 to FIG. 3, to implement a function of the multicast IP address assignment apparatus in the foregoing method.

The transceiver 501 is configured to receive an inner multicast IP address sent by a first switch of a plurality of switches, where the inner multicast IP address is a multicast IP address assigned by a multicast source to a multicast service, and the first switch is any one of the plurality of switches.

The processor 502 is configured to determine an outer multicast IP address corresponding to the inner multicast IP address, where the outer multicast IP address is used to identify the multicast service in a VXLAN.

The transceiver 501 is configured to send an IP address indication message to the first switch in the VXLAN, where the IP address indication message includes the outer multicast IP address and the inner multicast IP address.

In this embodiment, after the transceiver 501 receives the inner multicast IP address that is assigned by the multicast source to the multicast service and that is sent by the first switch of the switches, the processor 502 determines, based on the inner multicast IP address, the outer multicast IP address corresponding to the inner multicast IP address, where the outer multicast IP address identifies the multicast service in the VXLAN; and then, the transceiver 501 sends the outer multicast IP address to the first switch in the VXLAN. In this solution, the outer multicast IP address corresponding to the multicast group is automatically configured by the VXLAN without manual configuration, so that configuration workloads can be reduced and a configuration error rate can be reduced.

For details, refer to FIG. 6. FIG. 6 shows an embodiment of a switch according to an embodiment of this application. The switch includes:
a receiving module 601, configured to receive a multicast response message sent by a server connected to the switch, where the multicast response message is sent by the server based on a multicast query message sent by a multicast source, the multicast response message includes an inner multicast IP address, and the inner multicast IP address is a multicast IP address assigned by the multicast source to a multicast service;
a processing module 602, configured to obtain the inner multicast IP address from the multicast response message; and
a sending module 603, configured to send the inner multicast IP address to a multicast IP address assignment apparatus, where
the receiving module 601 is configured to receive an IP address indication message sent by the multicast IP address assignment apparatus, where the IP address indication message includes an outer multicast IP address and the inner multicast IP address, and the outer multicast IP address is determined by the multicast IP address assignment apparatus based on the inner multicast IP address.

Optionally, the IP address indication message is an Ethernet VPN EVPN protocol extension message; the EVPN protocol extension message includes a type field, a length field, and a value field; the type field is used to indicate a type of the EVPN protocol extension message; the length field is used to indicate a length of the EVPN protocol extension message; and the value field is used to indicate the outer multicast IP address and the inner multicast IP address.

Optionally, the processing module 602 is further configured to update a multicast encapsulation table based on the outer multicast IP address and the inner multicast IP address, where each entry of the multicast encapsulation table is used to record an inner multicast IP address and a corresponding outer multicast IP address.

In this embodiment, the processing module 602 obtains the inner multicast IP address from the multicast response message that is sent by the server and that is received by the receiving module 601, and the sending module 603 sends the inner multicast IP address to the multicast IP address assignment apparatus, so that the multicast IP address assignment apparatus determines the outer multicast IP address corresponding to the inner multicast IP address. This can ensure that an outer multicast IP address can be determined for an on-demand multicast service that is requested by each server, and can effectively ensure that a same outer multicast IP address is used for same multicast services, thereby reducing configuration workloads and a configuration error rate in a VXLAN.

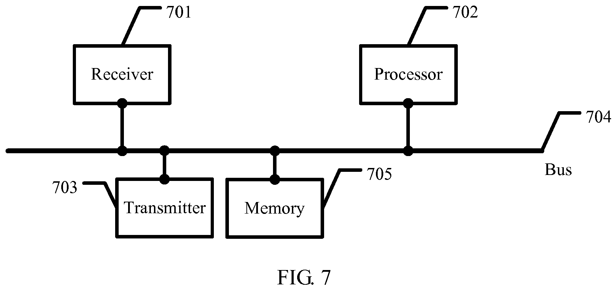

For details, refer to FIG. 7. FIG. 7 shows another embodiment of a switch according to an embodiment of this application. The switch includes:
a receiver 701, a processor 702, a transmitter 703, and a bus 704, where the receiver 701, the transmitter 703, and the processor 702 are connected by using the bus 704.

The bus 704 may be a Peripheral Component Interconnect (Peripheral Component Interconnect, PCI for short) bus, an Extended Industry Standard Architecture (Extended Industry Standard Architecture, EISA for short) bus, or the like. The bus may be classified into an address bus, a data bus, a control bus, and the like. For ease of representation, the bus is represented by using only one bold line in FIG. 7. However, this does not mean that there is only one bus or one type of bus.

The processor 702 may be a central processing unit (central processing unit, CPU for short), a network processor (network processor, NP for short), or a combination of a CPU and an NP.

The processor 702 may further include a hardware chip. The foregoing hardware chip may be an application-specific integrated circuit (application-specific integrated circuit, ASIC for short), a programmable logic device (programmable logic device, PLD for short), or a combination thereof. The PLD may be a complex programmable logic device (complex programmable logic device, CPLD for short), a field-programmable gate array (field-programmable gate array, FPGA for short), a generic array logic (generic array logic, GAL for short), or any combination thereof.

Referring to FIG. 7, the switch may further include a memory 705. The memory 705 is configured to store a multicast encapsulation table. The memory 705 may include a volatile memory (volatile memory), for example, a random-access memory (random-access memory, RAM for short). The memory may alternatively include a non-volatile memory (non-volatile memory), for example, a flash memory (flash memory), a hard disk drive (hard disk drive, HDD for short), or a solid-state drive (solid-state drive, SSD for short). The memory 705 may alternatively include a combination of the foregoing types of memories.

Optionally, the memory 705 may be further configured to store a program instruction. By invoking the program instruction stored in the memory 705, the processor 702 can perform one or more steps or an optional implementation in the embodiments shown in FIG. 1 to FIG. 3, to implement a function of the switch in the foregoing method.

The receiver 701 is configured to receive a multicast response message sent by a server connected to the switch, where the multicast response message is sent by the server based on a multicast query message sent by a multicast source, the multicast response message includes an inner multicast IP address, and the inner multicast IP address is a multicast IP address assigned by the multicast source to a multicast service.

The processor 702 is configured to obtain the inner multicast IP address from the multicast response message.

The transmitter 703 is configured to send the inner multicast IP address to a multicast IP address assignment apparatus.

The receiver 701 is configured to receive an IP address indication message sent by the multicast IP address assignment apparatus, where the IP address indication message includes an outer multicast IP address and the inner multicast IP address, and the outer multicast IP address is determined by the multicast IP address assignment apparatus based on the inner multicast IP address.

In this embodiment, the processor 702 obtains the inner multicast IP address from the multicast response message that is sent by the server and that is received by the receiver 701, and the transmitter 703 sends the inner multicast IP address to the multicast IP address assignment apparatus, so that the multicast IP address assignment apparatus determines the outer multicast IP address corresponding to the inner multicast IP address. This can ensure that an outer multicast IP address can be determined for an on-demand multicast service that is requested by each server, and can effectively ensure that a same outer multicast IP address is used for same multicast services, thereby reducing configuration workloads and a configuration error rate in a VXLAN.

All or some of the foregoing embodiments may be implemented by using software, hardware, firmware, or any combination thereof. When software is used to implement the embodiments, the embodiments may be implemented completely or partially in a form of a computer program product.

The computer program product includes one or more computer instructions. When the computer program instructions are loaded and executed on a computer, the procedures or functions according to the embodiments of the present invention are all or partially generated. The computer may be a general-purpose computer, a dedicated computer, a computer network, or another programmable apparatus. The computer instructions may be stored in a computer readable storage medium, may be transmitted from one computer readable storage medium to another computer readable storage medium, or the like.

It may be clearly understood by persons skilled in the art that, for the purpose of convenient and brief description, for a detailed working process of the foregoing system, apparatus, and unit, reference may be made to a corresponding process in the foregoing method embodiment, and details are not described herein again.

The foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A multicast Internet Protocol IP address assignment method, wherein the method is applied to a Virtual Extensible Local Area Network VXLAN, the VXLAN comprises a multicast IP address assignment apparatus and a plurality of switches, and each switch is connected to at least one server; and the method comprises:
receiving, by the multicast IP address assignment apparatus, an inner multicast IP address sent by a first switch of the plurality of switches, wherein the inner multicast IP address is a multicast IP address assigned by a multicast source to a multicast service, and the first switch is any one of the plurality of switches;
determining, by the multicast IP address assignment apparatus, an outer multicast IP address corresponding to the inner multicast IP address, wherein the outer multicast IP address is used to identify the multicast service in the VXLAN; and
sending, by the multicast IP address assignment apparatus, an IP address indication message to the first switch in the VXLAN, wherein the IP address indication message comprises the outer multicast IP address and the inner multicast IP address.

2. The method according to claim 1, wherein the determining, by the multicast IP address assignment apparatus, an outer multicast IP address corresponding to the inner multicast IP address comprises:
determining, by the multicast IP address assignment apparatus based on the inner multicast IP address, whether an outer multicast IP address has been assigned for the inner multicast IP address; and
if no outer multicast IP address has been assigned for the inner multicast IP address, assigning, by the multicast IP address assignment apparatus, an outer multicast IP address for the inner multicast IP address.

3. The method according to claim 2, wherein the determining, by the multicast IP address assignment apparatus based on the inner multicast IP address, whether an outer multicast IP address has been assigned for the inner multicast IP address comprises:
determining, by the multicast IP address assignment apparatus, whether there is an outer multicast IP address corresponding to the inner multicast IP address in a multicast encapsulation table, wherein each entry of the multicast encapsulation table is used to record an inner multicast IP address and a corresponding outer multicast IP address; and
if there is an outer multicast IP address corresponding to the inner multicast IP address in the multicast encapsulation table, determining, by the multicast IP address assignment apparatus, that the outer multicast IP address has been assigned for the inner multicast IP address; or
if there is no outer multicast IP address corresponding to the inner multicast IP address in the multicast encapsulation table, determining, by the multicast IP address assignment apparatus, that no outer multicast IP address has been assigned for the inner multicast IP address.

4. The method according to claim 2, wherein the multicast IP address assignment apparatus comprises an IP address pool, the IP address pool comprises a plurality of IP addresses, and the assigning, by the multicast IP address assignment apparatus, an outer multicast IP address for the inner multicast IP address comprises:
selecting, by the multicast IP address assignment apparatus, an unused IP address from the IP address pool as the outer multicast IP address corresponding to the inner multicast IP address.

5. The method according to any one of claims 2 to 4, wherein after the determining, by the multicast IP address assignment apparatus based on the inner multicast IP address, whether an outer multicast IP address has been assigned for the inner multicast IP address, the method further comprises:
if the multicast IP address assignment apparatus has assigned the corresponding outer multicast IP address for the inner multicast IP address, obtaining, by the multicast IP address assignment apparatus, the outer multicast IP address.

6. The method according to any one of claims 2 to 5, wherein the IP address indication message is an Ethernet Virtual Private Network EVPN protocol extension message; the EVPN protocol extension message comprises a type field, a length field, and a value field; the type field is used to indicate a type of the EVPN protocol extension message; the length field is used to indicate a length of the EVPN protocol extension message; and the value field is used to indicate the outer multicast IP address and the inner multicast IP address.

7. An outer multicast IP address assignment method, wherein the method is applied to a Virtual Extensible Local Area Network VXLAN, the VXLAN comprises a multicast IP address assignment apparatus and a plurality of switches, and each switch is connected to at least one server; and the method comprises:
receiving, by a first switch, a multicast response message sent by a server connected to the first switch, wherein the multicast response message is sent by the server based on a multicast query message sent by a multicast source, the multicast response message comprises an inner multicast IP address, the inner multicast IP address is a multicast IP address assigned by the multicast source to a multicast service, and the first switch is any one of the plurality of switches;
obtaining, by the first switch, the inner multicast IP address from the multicast response message;
sending, by the first switch, the inner multicast IP address to the multicast IP address assignment apparatus; and
receiving, by the first switch, an IP address indication message sent by the multicast IP address assignment apparatus, wherein the IP address indication message comprises an outer multicast IP address and the inner multicast IP address, and the outer multicast IP address is determined by the multicast IP address assignment apparatus based on the inner multicast IP address.

8. The method according to claim 7, wherein the IP address indication message is an Ethernet Virtual Private Network EVPN protocol extension message; the EVPN protocol extension message comprises a type field, a length field, and a value field; the type field is used to indicate a type of the EVPN protocol extension message; the length field is used to indicate a length of the EVPN protocol extension message; and the value field is used to indicate the outer multicast IP address and the inner multicast IP address.

9. The method according to claim 7 or 8, wherein after the receiving, by the first switch, an IP address indication message sent by the multicast IP address assignment apparatus, the method further comprises:
updating, by the first switch, a multicast encapsulation table based on the outer multicast IP address and the inner multicast IP address, wherein each entry of the multicast encapsulation table is used to record an inner multicast IP address and a corresponding outer multicast IP address.

10. A multicast IP address assignment apparatus, applied to a Virtual Extensible Local Area Network VXLAN, wherein the VXLAN comprises the multicast IP address assignment apparatus and a plurality of switches, and each switch is connected to at least one server; and the multicast IP address assignment apparatus comprises:
a receiving module, configured to receive an inner multicast IP address sent by a first switch of the plurality of switches, wherein the inner multicast IP address is a multicast IP address assigned by a multicast source to a multicast service, and the first switch is any one of the plurality of switches;
a processing module, configured to determine an outer multicast IP address corresponding to the inner multicast IP address, wherein the outer multicast IP address is used to identify the multicast service in the VXLAN; and
a sending module, configured to send an IP address indication message to the first switch in the VXLAN, wherein the IP address indication message comprises the outer multicast IP address and the inner multicast IP address.

11. The multicast IP address assignment apparatus according to claim 10, wherein the processing module is specifically configured to: determine, based on the inner multicast IP address, whether an outer multicast IP address has been assigned for the inner multicast IP address; and
if no outer multicast IP address has been assigned for the inner multicast IP address, assign an outer multicast IP address for the inner multicast IP address.

12. The multicast IP address assignment apparatus according to claim 11, wherein the processing module is specifically configured to: determine whether there is an outer multicast IP address corresponding to the inner multicast IP address in a multicast encapsulation table, wherein each entry of the multicast encapsulation table is used to record an inner multicast IP address and a corresponding outer multicast IP address; and
if there is an outer multicast IP address corresponding to the inner multicast IP address in the multicast encapsulation table, determine that the outer multicast IP address has been assigned for the inner multicast IP address; or
if there is no outer multicast IP address corresponding to the inner multicast IP address in the multicast encapsulation table, determine that no outer multicast IP address has been assigned for the inner multicast IP address.

13. The multicast IP address assignment apparatus according to claim 11, wherein the processing module is specifically configured to select an unused IP address from the IP address pool as the outer multicast IP address corresponding to the inner multicast IP address.

14. The multicast IP address assignment apparatus according to any one of claims 10 to 13, wherein the processing module is further configured to: if the corresponding outer multicast IP address has been assigned for the inner multicast IP address, obtain the outer multicast IP address.

15. The multicast IP address assignment apparatus according to any one of claims 10 to 14, wherein the IP address indication message is an Ethernet Virtual Private Network EVPN protocol extension message; the EVPN protocol extension message comprises a type field, a length field, and a value field; the type field is used to indicate a type of the EVPN protocol extension message; the length field is used to indicate a length of the EVPN protocol extension message; and the value field is used to indicate the outer multicast IP address and the inner multicast IP address.

16. A switch, applied to a Virtual Extensible Local Network Area VXLAN, wherein the VXLAN comprises a multicast IP address assignment apparatus and a plurality of switches, each switch is connected to at least one server, and the switch is any one of the plurality of switches; and the switch comprises:
a receiving module, configured to receive a multicast response message sent by a server connected to the switch, wherein the multicast response message is sent by the server based on a multicast query message sent by a multicast source, the multicast response message comprises an inner multicast IP address, and the inner multicast IP address is a multicast IP address assigned by the multicast source to a multicast service;
a processing module, configured to obtain the inner multicast IP address from the multicast response message; and
a sending module, configured to send the inner multicast IP address to the multicast IP address assignment apparatus, wherein
the receiving module is configured to receive an IP address indication message sent by the multicast IP address assignment apparatus, wherein the IP address indication message comprises an outer multicast IP address and the inner multicast IP address, and the outer multicast IP address is determined by the multicast IP address assignment apparatus based on the inner multicast IP address.

17. The switch according to claim 16, wherein the IP address indication message is an Ethernet Virtual Private Network EVPN protocol extension message; the EVPN protocol extension message comprises a type field, a length field, and a value field; the type field is used to indicate a type of the EVPN protocol extension message; the length field is used to indicate a length of the EVPN protocol extension message; and the value field is used to indicate the outer multicast IP address and the inner multicast IP address.

18. The switch according to claim 16 or 17, wherein the processing module is further configured to update a multicast encapsulation table based on the outer multicast IP address and the inner multicast IP address, wherein each entry of the multicast encapsulation table is used to record an inner multicast IP address and a corresponding outer multicast IP address.
